# EUROPÄISCHE PATENTSCHRIFT

(11) **EP 0 925 199 B1**
(45) Veröffentlichungstag und Bekanntmachung des Hinweises auf die Patenterteilung: **17.04.2002**
(21) Anmeldenummer: 97909258.2
(22) Anmeldetag: 12.09.1997
(51) Int. Cl.: B60G 21/00

(54) **RADAUFHÄNGUNG MIT SELBSTTÄTIGER STURZANPASSUNG**
WHEEL SUSPENSION WITH AUTOMATIC CAMBER RESPONSE
SUSPENSION DE ROUE AVEC ADAPTATION AUTOMATIQUE EN CAS DE CHUTE

(30) Priorität: 12.09.1996 DE 19637159
(43) Veröffentlichungstag der Anmeldung: 30.06.1999
(73) Patentinhaber: Weiss, Wolfgang, 85521 Ottobrunn (DE)
(72) Erfinder: Weiss, Wolfgang, 85521 Ottobrunn (DE)
(74) Vertreter: Schlimme, Wolfram, Dr.-Ing.
(86) Internationale Anmeldenummer: EP9705008
(87) Internationale Veröffentlichungsnummer: WO9810949

(56) Entgegenhaltungen:
- US-A- 2 678 830

## Beschreibung

Die Erfindung betrifft eine Einzelradaufhängung für Fahrzeuge mit bei Kurvenfahrt sich gegensätzlich zum Fahrzeugrahmen bewegenden Radträgern, welche auf Basis der auf das Fahrzeug bei Kurvenfahrt einwirkende Kräfte eine selbsttätige Verstellung des Sturzes bewirkt, wobei Mittel vorgesehen sind, welche die Relativbewegung der bei Kurvenfahrt zueinander gegensätzlich bewegten Teile der Radaufhängung gegenüber dem Fahrzeugrahmen aufnehmen und über Betätigungsmittel auf den Sturzwinkel und/oder Lenkwinkel der Laufräder Einfluß nehmen. Eine Einzelradaufhängung gemäß dem Oberbegriff des Anspruchs 1 ist aus der Schrift EP-A-0 378 028 bekannt.

Bei Fahrzeugen mit Einzelradaufhängung läßt sich eine Veränderung der Fahrwerksgeometrie bei Kurvenfahrt (Rollbewegung des Fahrzeugrahmens) sowie beim Ein- und Ausfedern (Auf- und Abbewegung des Fahrzeugrahmens) nicht vermeiden.

In besonders nachteiliger Weise wird dabei der Sturzwinkel bei Kurvenfahrt beeinflußt. Ungünstige Sturzwinkel beeinflussen das Fahrverhalten des Fahrzeuges negativ, d.h. bei einer optimalen Sturzeinstellung für Geradeausfahrt leidet durch die oben beschriebene Geometrieveränderung das Fahrverhalten z.B. die Fahrsicherheit und Fahrgeschwindigkeit, da die maximal mögliche Reifenkontaktfläche resp. Seitenführungskraft nicht erzielt bzw. erreicht wird.

Gemäß dem Stand der Technik sind einige Anstrengungen unternommen worden, den Einfluß der Rollbewegung des Fahrzeugrahmens auf den Sturz zu beseitigen.

Um oben beschriebene Nachteile bei Kurvenfahrt zu umgehen, wurde beispielsweise vorgeschlagen, den Sturz bei Geradeausfahrt in den negativen Bereich einzustellen, was dann bei Kurvenfahrt optimalere Fahrbedingungen bzw. Sturzeinstellungen bewirkt.
Nachteilig ist hier, daß bei Geradeausfahrt die Reifenerwärmung über die Reifenbreite durch die einseitige Reifenaufstandsfläche sehr ungleichmäßig ist, was das Fahrverhalten bzw. die maximal übertragbaren Seitenführungskräfte des Reifens, insbesonders in der Kurve, reduziert.

Desweiteren wurde versucht, oben beschriebene Nachteile durch spezielle Lenkerkonfigurationen zu reduzieren. Beispielsweise wird mit ungleichlangen, nicht parallelen Lenkern einer Sturzverstellung beim Rollen des Fahrzeugrahmens entgegengewirkt. Nachteilig auf das Fahrverhalten wirkt sich hierbei die kaum vermeidbare Sturzverstellung beim Ein- und Ausfedern des Fahrzeugrahmens aus.

Diese Lösung kann daher nur als unbefriedigender Kompromiß angesehen werden.
In der Veröffentlichung "Design of racing sport cars" von Colin Campbell, Verlag Chapman & Hall Ltd., London EC 4P 4 EE wurde im Jahre 1973 bereits unter der Bezeichnung "Trebron DRC" (Double Roll Centre Suspension) vorgeschlagen, den Sturz über die Rollbewegung des Fahrzeugrahmens bzw. Fliehkrafteinwirkung auf diesen zu vestellen bzw. zu optimieren.

Bei dieser Konstruktion ist ein Zwischenrahmen erforderlich, welcher über bogenförmige Nuten auf fahrzeugrahmenfesten Führungszapfen um ein oberhalb des Fahrzeugschwerpunktes liegendes Zentrum verschwenkbar ist. An diesem Zwischenrahmen greifen die Feder/Dämpferelemente, sowie die unteren Querlenker an. Die oberen Querlenker sind über Hebel, welche ihrerseits um die fahrzeugrahmenseitigen Führungszapfen schwenkbar sind, angelenkt.
Der Zwischenrahmen ist mittels eines Lagerbolzens in Wirkverbindung mit dem Schwenkhebel verbunden.

Einen wesentlichen Nachteil stellt hierbei der Platzbedarf des Zwischenrahmens dar, was die Installation vom Fahrzeugteilen bzw. Motor/Getriebe usw, erheblich erschwert bzw. unmöglich macht. Die relativ große Anzahl von mechanischen, bezüglich der Spielfreiheit und Leichtgängigkeit problematischen, Teilen (Kulissenführungen usw.) steht auch einer notwendigen Steuerpräzision entgegen.

Erfindungsgemäß wird die Aufgabe durch den kennzeichnenden Teil des Anspruches 1 und den diesem folgenden Unteransprüchen gelöst.

Zur Lösung der Erfindung ist beispielsweise vorgesehen, daß zwischen Fahrzeugrahmen und den oszillierenden bzw. schwingenden Radträgern bzw. Aufhängungsteilen (Lenker) hydraulische Geberzylinder angeordnet sind, deren Arbeitsräume kreuzweise miteinander verbunden sind, welche Nehmerzylinder an den oberen Querlenkern ansteuern und damit eine Kompensation der Sturzänderung in Abhängigkeit von der Rollbewegung des Fahrzeugrahmens vollziehen.

Einige Ausführungsbeispiele der Erfindung sind anhand der Zeichnungen.wie folgt beschrieben.

Es zeigen:
- Fig. 1: eine schematische Ansicht auf eine Radaufhängung eines Fahrzeuges von hinten gesehen in Ruhe bzw. in einer neutralen Geradeausfahrsituation mit einer erfindungsgemäßen Steuervorrichtung,
- Fig. 2: eine schematische Ansicht auf die Radaufhängung gem. Fig. 1 bei Kurvenfahrt (Rechtskurve),
- Fig. 3: einen schematischen Hydraulikschaltplan der erfindungsgemäßen Steuereinrichtung gem. Fig. 1 und 2,
- Fig. 4: eine schematische Ansicht auf eine Radaufhängung in einer Fahrsituation gem. Fig. 2 ohne einer erfindungsgemäßen Einrichtung,
- Fig. 5: eine Radaufhängung mit einer weiteren Ausführungsform einer erfindungsgemäßen Steuereinrichtung in einer Darstellung gem. Fig. 1,
- Fig. 6: die Ausführungsform gem. Fig. 5 in einer Fahrsituation gem. Fig. 2,
- Fig. 7: eine Radaufhängung mit einer erfindungsgemäßen Steuereinrichtung in einer weiteren, gegenüber Fig. 5 abgewandelten Ausführungsform,
- Fig.8: einen schematischen Hydraulikschaltplan der erfindungsgemäßen Steuereinrichtung gem. Fig. 5 bis 7,
- Fig. 9: eine Radaufhängung mit einer weiteren besonders bevorzugten Ausführungsform einer erfindungsgemäßen Steuereinrichtung in einer Darstellung gem. Fig. 1,
- Fig. 10: die Ausführungsform gem. Fig. 9 in einer Fahrsituation gem. Fig. 2,
- Fig. 11: einen schematischen Hydraulikschaltplan der erfindungsgemäßen Steuereinrichtung gem. Fig. 9 und 10.

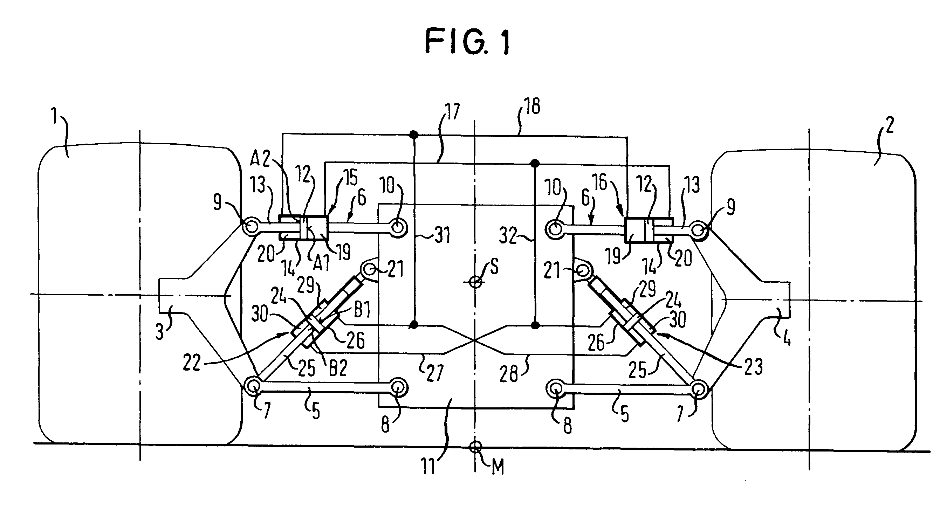

Die Darstellungen Fig. 1, 2, 4, 5, 6, 7, 9 und 10 zeigen schematisch eine Ansicht von hinten auf eine Hinterachsradaufhängung, bei welcher der Deutlichkeit halber auf die Federelemente und Dämpferelemente verzichtet wurde, da diese dem Fachmann aus dem Stand der Technik bekannt sind und primär für die Erfindung nicht relevant sind.

Auch die Fahrzeugrahmen/Lenker/Radträgerkonfiguration, hier mit gleichlangen parallelen Lenkern, ist in den Figuren nur beispielhaft wiedergegeben und keinesfalls einschränkend auf die Erfindung zu verstehen. Bei einer erfindungsgemäßen Ausstattung dieser Konfiguration - gleichlange parallele Lenker - können die Vorteile (keine Sturzveränderung bei Ein- und Ausfedern) ohne die üblicherweise auftretenden Nachteile (Sturzveränderung bei Kurvenfahrt ect.) genutzt werden. Es ist für den Fachmann leicht ersichtlich, daß die Erfindung im Prinzip auf alle bekannten Einzelradaufhängungen mit bei Kurvenfahrt gegensätzlich beweglichen Radträgenr anwendbar ist.

Ebenso ist die Erfindung natürlich auch auf lenkbare Achsen anwendbar, wobei hier gegebenenfalls die üblicherweise am oberen Bereich der Radträger angreifenden Spurstangen in die Ebene der unteren Querlenker gelegt werden müssen, wobei die Spurstangen die Länge der unteren Querlenker haben sollen, oder diese entsprechende Ausgleichselemente aufweisen müssen (nicht dargestellt).

Die Hydraulikelemente (Geberzylinder, Arbeits- bzw. Stellzylinder) sind bezüglich ihrer Auslegung und Anbringung schematisch angedeutet. Es ist nicht unbedingt zwingend, die Geberzylinder, wie dargestellt, direkt zwischen dem Fahrzeugrahmen und einem schwingenden Teil der Radaufhängung anzuordnen. Vielmehr kann die Relativbewegung zwischen Fahrzeugrahmen und schwingendem Teil der Radaufhängung beispielsweise über Stoß- bzw. Zugstreben und Umlenkhebel indirekt in den Geberzylinder eingeleitet werden, was bezüglich der räumlichen Anordnung der Geberzylinder und einer möglichen Progressivität/Degressivität/Übersetzung in der Steuercharakteristik weitere vorteilhafte Gestaltungsmöglichkeiten eröffnet.

Bei dem Hydraulikleitungssystem können entweder flexible Schlauchleitungen oder vorzugsweise starre Rohrleitungen zum Einsatz kommen, wobei bei Rohrleitungen flexible Schlauchleitungen, vorzugsweise so kurz wie möglich, an den entsprechenden beweglichen Übergangsstellen vorgesehen sind. Dies ist in den Darstellungen zugunsten der Deutlichkeit der Erfindungsoffenbarung nicht weiter gezeigt. In besonders vorteilhafter Weise können die Geber- und Stellzylinder, sowie diverse Rückschlagventile und ggf. Strömungsdrosseln, in einem Block zusammengefaßt sein, wobei auf Leitungsverbindungen weitestgehend verzichtet werden kann (nicht dargestellt).
Die Figur 1 zeigt zwei virtuell angedeutete Fahrzeugräder 1, 2, welche über Radträger 3, 4, untere und obere Querlenker 5, 6 über entsprechende Anlenkpunkte 7, 8, 9, 10 mit dem Fahrzeugrahmen 11 verbunden sind. Die oberen Querlenker 6 sind zweiteilig ausgebildet, derart, daß der erste Teil als eine einen Kolben 12 tragende Kolbenstange 13 und der zweite Teil einen den Kolben aufnehmenden Zylinder 14 aufweist, mit anderen Worten, die oberen Querlenker 6 sind mittels doppelt wirkender Hydraulikzylinder bzw. Stellzylinder 15, 16 in ihrer Länge variabel. Die Stellzylinder 15, 16 sind mit Leitungen 17, 18 verbunden, derart, daß der rahmenseitige Druckraum 19 des Stellzylinders 15 mit dem radträgerseitigen Druckraum 20 des Stellzylinders 16 verbunden ist. Ebenso ist der rahmenseitige Druckraum 19 des Stellzylinders 16 mit dem radträgerseitigen Druckraum 20 des Stellzylinders 15 verbunden.

Die Kolbenfläche (A1) des rahmenseitigen Druckraumes 19 ist beispielsweise größer als die Kolbenfläche (A2) des radträgerseitigen Druckraumes 20. Dadurch ergibt sich zunächst ein, in sich betrachtet, starres System, d.h. die oberen Querlenker 6 sind in ihrer Länge zunächst unveränderbar, da die Kolben 12 in ihren Zylindern 14 durch obengenannte Bedingung (A1/A2 ungleich 1) blockiert sind.
Zwischen den rahmenseitigen Anlenkpunkten 21 einerseits und den radträgerseitigen Anlenkpunkten 7 andererseits sind doppeltwirkende Hydraulikzylinder als Geberzylinder 22, 23 angeordnet, derart, daß beispielsweise die die Kolben 24 tragenden Kolbenstangen 25 mit den radträgerseitigen Anlenkpunkten 7 und die Zylinder 26 mit den rahmenseitigen Anlenkpunkten 21 verbunden sind.
Die Anlenkpunkte der Geberzylinder 22, 23 sind so gewählt , daß beim Ein- bzw. Ausfedern des Fahrzeugrahmens 11 eine Relativbewegung zwischen diesen statt findet. Die Druckräume der Geberzylinder 22, 23 sind mittels Leitungen 27, 28 diagonal verbunden, d.h. die rahmenseitigen Druckräume 29 einerseits sind mit den radträgerseitigen Druckräumen 30 andererseits verbunden. Sämtliche Kolbenflächen (B1, B2) der Druckräume 29, 30 sind bei den Geberzylindern 22, 23 gleich groß, d.h. die Geberzylinder bilden in sich betrachtet ein bewegliches System, welches das Ein- und Ausfedern ermöglicht, mit anderen Worten, die Kolben 24 sind aufgrund der Bedingung B1/B2 = 1 in ihren Zylindern 26 synchron beweglich.

Die Verbindungsleitungen 27, 28 der Geberzylinder 22, 23 (bewegliches System) sind mittels Leitungen 31, 32 mit den Verbindungsleitungen 17, 18 der Stellzylinder 15, 16 (starres System) verbunden, derart, daß z.B. bei Kurvenfahrt resp. der daraus resultierenden Rollbewegung des Fahrzeugrahmens 11 um das Momentanzentrum M, d.h. durch das Einfedern des kurvenaußenseitigen Rades 1 und das Ausfedern des kurveninnenseitigen Rades 2 bewirkte Volumenverdrängung in den Geberzylindern 22, 23 auf die Volumensituation in den Zylinderräumen 19, 20 der Stellzylinder 15, 16 einwirkt, so daß sich die Länge der oberen Querlenker 6 gegensinnig verändert.

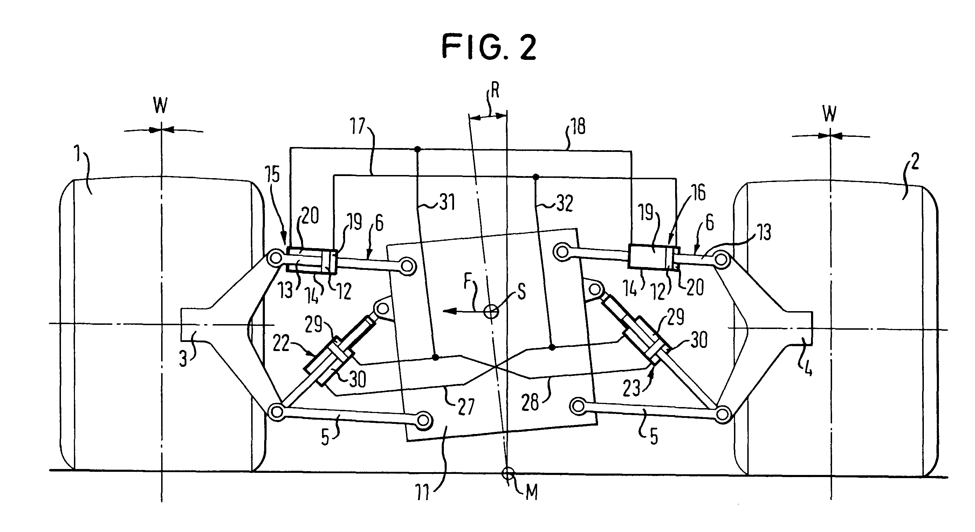

Fig. 2 zeigt das Fahrzeug gem. Fig. 1 in einer Rechtskurve, d.h. aufgrund der im Schwerpunkt S angreifenden Fliehkraft F hat sich der Fahrzeugrahmen 11 um das Momentanzentrum M geneigt. Wie in Fig. 2 erkennbar, wurde das Volumen aus dem Druckraum 29 des Geberzylinders 22 und das Volumen des Druckraumes 30 des Geberzylinders 23 in den Druckraum 20 des Stellzylinders15 und den Druckraum 19 des Stellzylinders 16 überführt. Zwangsläufig wurde aus dem Druckraum 19 des Stellzylinders 15 und aus dem Druckraum 20 des Stellzylinders 16 Volumen in die Druckräume 30, 29 der Geberzylinder 22, 23 übertragen.
Die daraus resultierende Längenveränderung der oberen Querlenker bewirkt eine Sturzkorrektur der Räder 1, 2 bzw. es bleibt der Sturzwinkel W (Fig. 2) trotz Rollbewegung (Winkel R in Fig. 2) des Fahrzeugrahmens 11, hier beispiels weise, auf Null Grad.
Durch entsprechende Auslegung der Geber- und Stellzylinder sowie Variation der Anlenkpunkte der Geberzylinder sind aber auch andere Verstellungen bezüglich des Radsturzes, falls sich das als vorteilhaft erweist, machbar.

Es liegt auch im Rahmen der Erfindung, die Verstellung des Radträgers durch die Stellzylinder nicht ausschließlich in einer vertikalen Ebene (reine Sturzverstellung) auszuführen, vielmehr kann auch eine Verstellung in einem von der vertikalen Ebene abweichenden Bereich, bis hin zur horizontalen Ebene, erfolgen, d.h. entsprechende Stellelemente können auch in den Spurstangen zur Optimierung der Lenkgeometrie Anwendung finden.

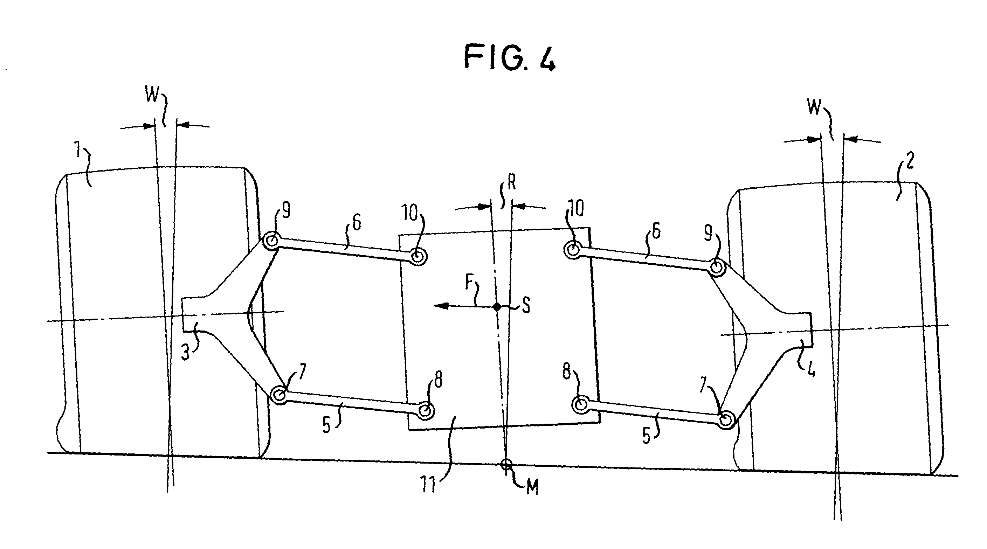

Im Vergleich hierzu zeigt Fig. 4 die gleiche Situation gem. Fig. 2 (Rollwinkel R), bei welcher keine erfindungsgemäße Vorrichtung vorgesehen ist. Man erkennt deutlich die Sturzveränderung beider Laufräder 1, 2, (Winkel W), was sich nach teilig auf die Querkraftaufnahme durch ungünstigen Reifenkontakt am kurvenäußeren, d.h. hauptsächlich tragenden Rad, auswirkt. In der Praxis wird dem durch voreingestellten negativen Sturz sowie mit einer speziellen Lenkerkonfiguration - ungleichlange nichtparallele Lenker - begegnet, wobei hier bei Geradeausfahrt ein ungleiches Temperaturprofil über die Reifenbreite, d.h. punktuelle Überhitzung entstehen kann, was den Reifenverschleiß fördert. Die "kalten Bereiche" des Reifens können ihre maximalen Haftungswerte nicht erreichen. Durch die Lenkeranordnung gem. dem Stand der Technik ist eine Sturzverstellung beim Ein- und Ausfedern nicht vermeidbar.

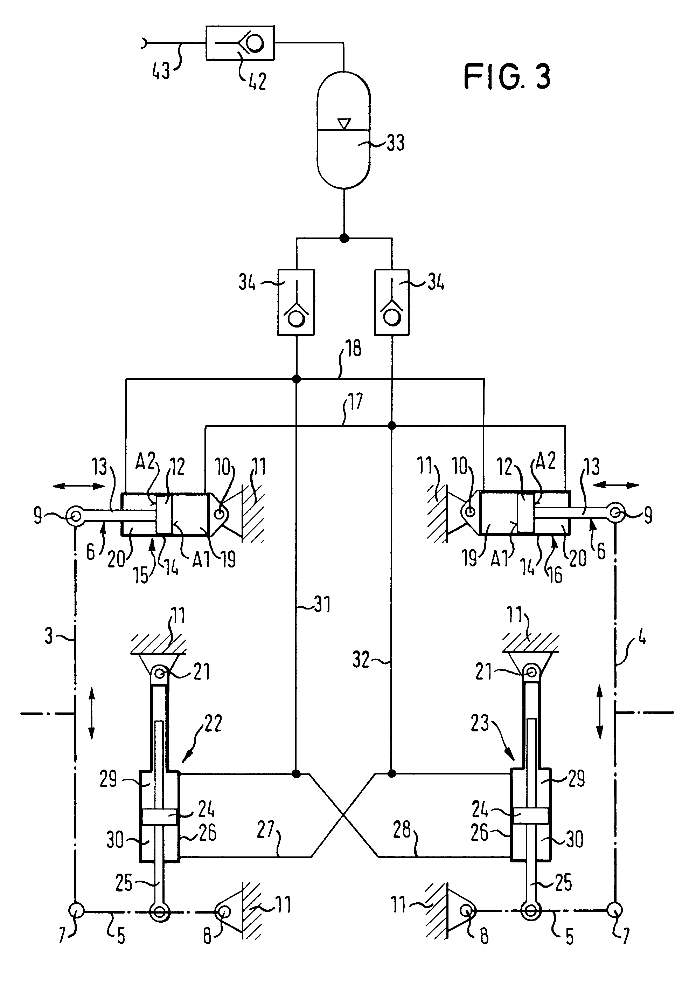

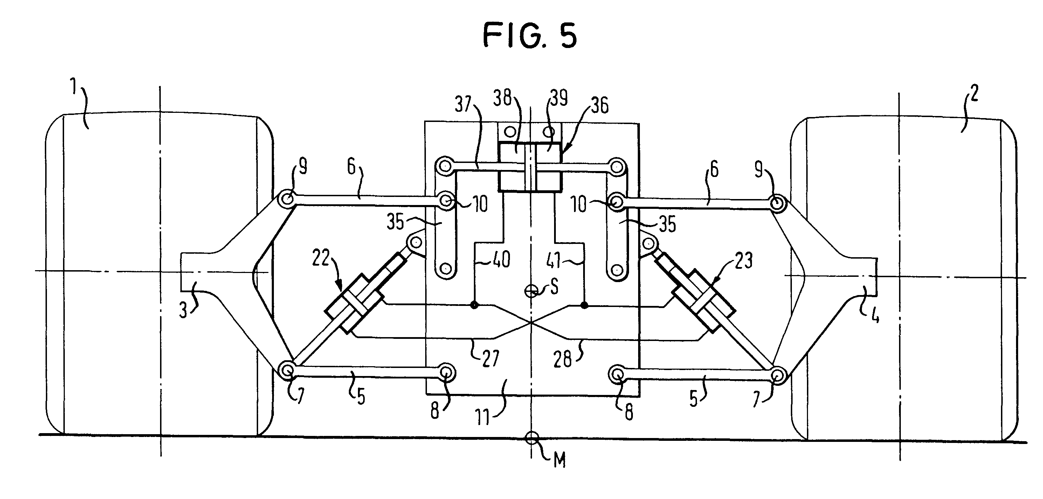

In Fig. 3 ist die in Fig. 1 und 2 vorgesehene erfindungsgemäße, vorzugsweise hydraulische Anlage schematisch als Schaltplan wiedergegeben. Gleiche Teile sind mit gleichen Bezugszeichen versehen.
Das gesamte hydraulische System ist mit einem Druckspeicher 33 auf erhöhten Basisdruck gebracht, um etwaige Ungenauigkeiten und Verzögerungen in der Verstellung aufgrund von ungewollten Volumenänderungen im Leitungssystem zu minimieren. Der Druckspeicher 33 ist über Rückschlagventile 34 mit den Leitungen 31, 32 verbunden. Der Druckspeicher 33 wird im wesentlichen durch zwei durch eine Membran oder einen Kolben getrennte Druckräume gebildet, wobei in einem Druckraum ein Gasdruck über eine ein Rückschlagventil 42 aufweisende Anschlußleitung 43 aufgebaut wird und der andere Druckraum mit dem Hydrauliksystem verbunden ist. Anstelle des oben beschriebenen Druckspeichers kann auch eine geeignete Hydraulikpumpe mit Accumulator vorgesehen sein (nicht dargestellt). Diese im Zusammenhang mit Fig. 1, 2 und 3 beschriebene Vorrichtung zur Erhöhung des Basisdruckes findet auch Anwendung für die weiteren dargestellten Beispiele (Fig. 5 bis 11).

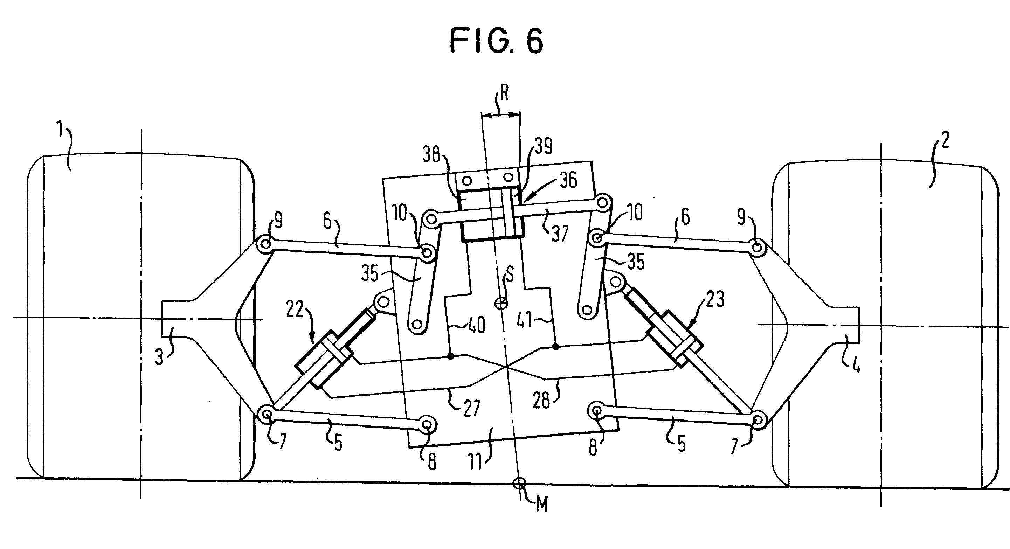

Die Figuren 5 und 6 zeigen ein weiteres Ausführungsbeispiel der Erfindung in gegenüber den Figuren 1 und 2 ähnlicher Darstellung. Gleiche Bauteile sind hier mit gleichen Bezugszeichen versehen. Im Unterschied zu Fig. 1 und 2 ist in Figur 4 und 5 der rahmenseitige Anlenkpunkt 10 der oberen Querlenker 6, welche hier als längenunveränderliche Bauteile ausgebildet sind, beweglich über Stellhebel 35 am Fahrzeugrahmen 11 befestigt. Die oberen Querlenker 6 werden durch einen am Fahrzeugrahmen 11 festgelegten doppelt wirkenden Hydraulikkolben/Zylinderanordnung 36 (Stellzylinder), bzw. durch dessen gemeinsame Kolbenstange 37 beaufschlagt. Die beiden Druckräume 38, 39 des Stellzylinders 36 sind durch die Leitungen 40, 41 mit dem Geberzylindersystem (22,23) verbunden.
Beim Rollen des Fahrzeugrahmens 11, wie Fig. 6 zeigt, wird die Kolbenstange 37 des Stellzylinders 36, resp. die rahmenseitigen Aufhängungspunkte 10 der oberen Querlenker 6 über die Stellhebel 35 verstellt, was eine Sturzkorrektur zur Folge hat. Durch die Hebelanordnung 35 können durch Verstellen der Anlenkpunkte verschiedene Übersetzungsverhältnisse bzw. bei geeigneter Konfiguration der Hebel verschiedene Verstelleigenschaften (linear, progressiv, degressiv) realisiert werden.

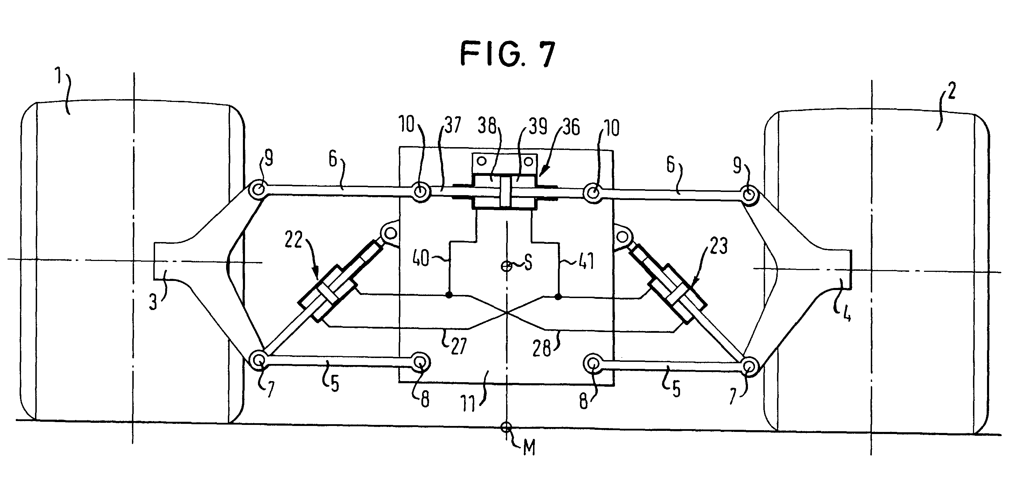

Eine gegenüber Fig. 5 und 6 vereinfachte Ausführungsvariante ohne Stellhebel 35 ist in Fig. 7 dargestellt. Die Kolbenstange 37 wirkt direkt auf die Aufhängungspunkte 10,oder über nicht dargestellte Koppelstangen mit den Anlenkpunkten 9 zusammen.

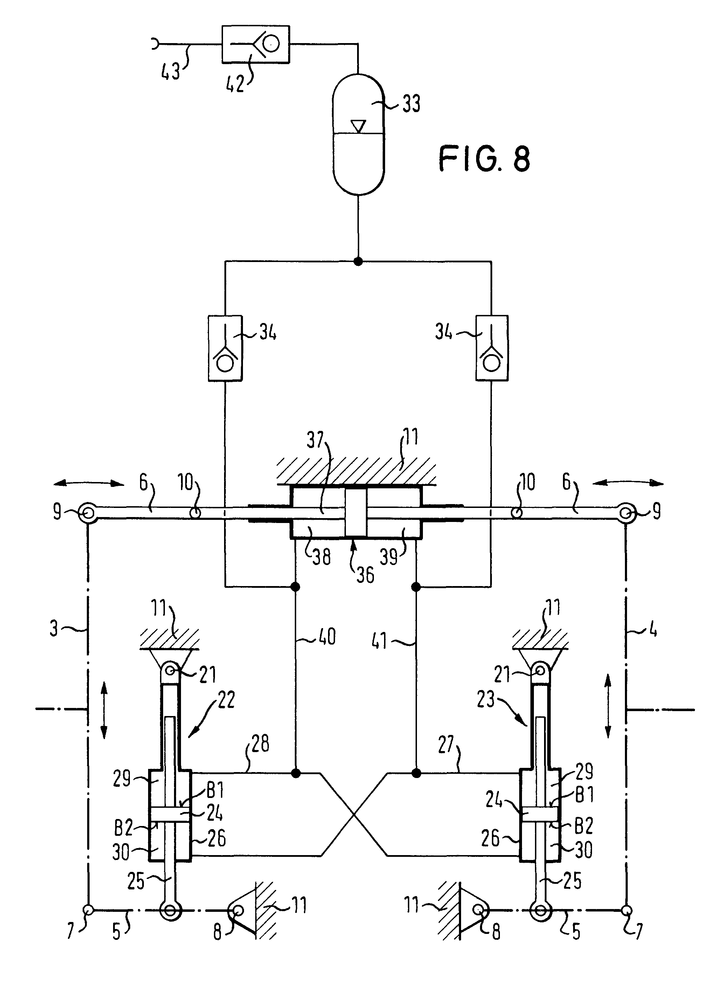

In Fig. 8 ist die in Fig. 5, 6 und 7 vorgesehene erfindungsgemäße, vorzugsweise hydraulische, Anlage schematisch als Schaltplan wiedergegeben. Gleiche Teile sind mit gleichen Bezugszeichen versehen.

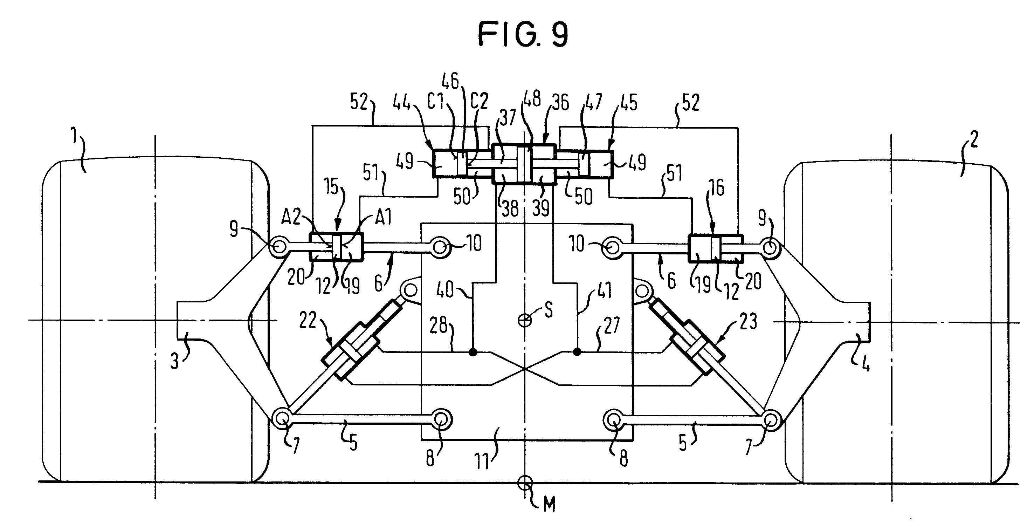

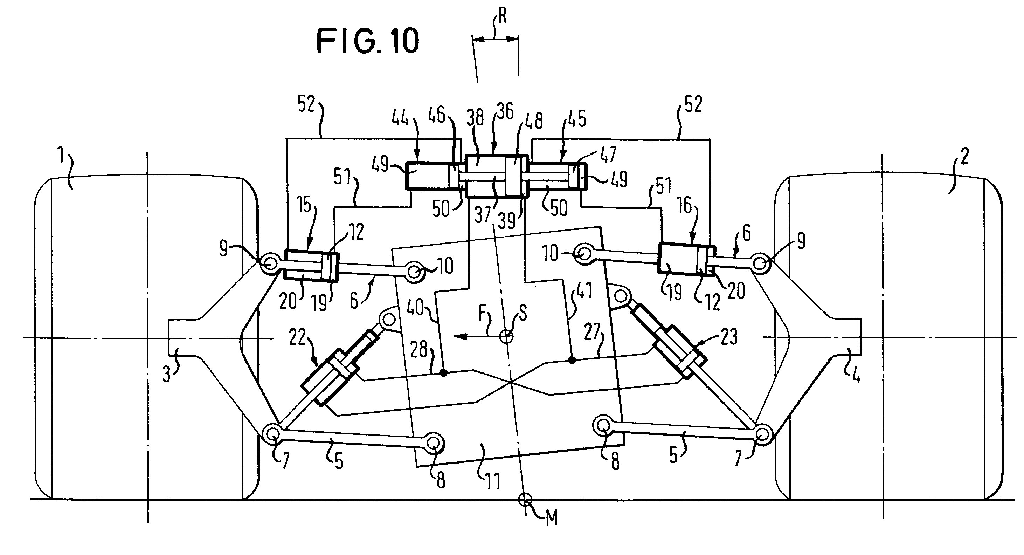

Fig. 9 und 10 zeigen eine Kombination aus den Ausführungsbeispielen gem. der Fign. 1, 2 und 5, 6, 7. Als Verstellorgan sind hier beispielsweise Stellzylinder 15 und 16 gem. Fig. 1 und 2 vorgesehen, welche aber nicht direkt von den Geberzylindern 22, 23 sondern über Übertragungszylinder 44, 45 beaufschlagt werden.

Die Kolben 46, 47 der Übertragungszylinder 44, 45 sind über eine gemeinsame Kolbenstange 37 mit dem Kolben 48 des Stellzylinders 36 verbunden.
Die Übertragungszylinder 44, 45 sind vorzugsweise integraler Bestandteil des Stellzylinders 36. Die Druckräume 19, 20 der Stellzylinder sind mit den Druckräumen 49, 50 der Übertragungszylinder 44, 45 mittels Leitungen 51, 52 verbunden.
Durch Auslegung der Kolbenflächenverhältnisse A1/A2 der Stellzylinder 15, 16 zu den Kolbenflächen C1/C2 der Übertragungszülinder 44, 45 kann das hydraulische Übersetzungsverhältnis eingestellt werden, wobei die Bedingung "A1/A2 = C1/C2" erfüllt sein muß.

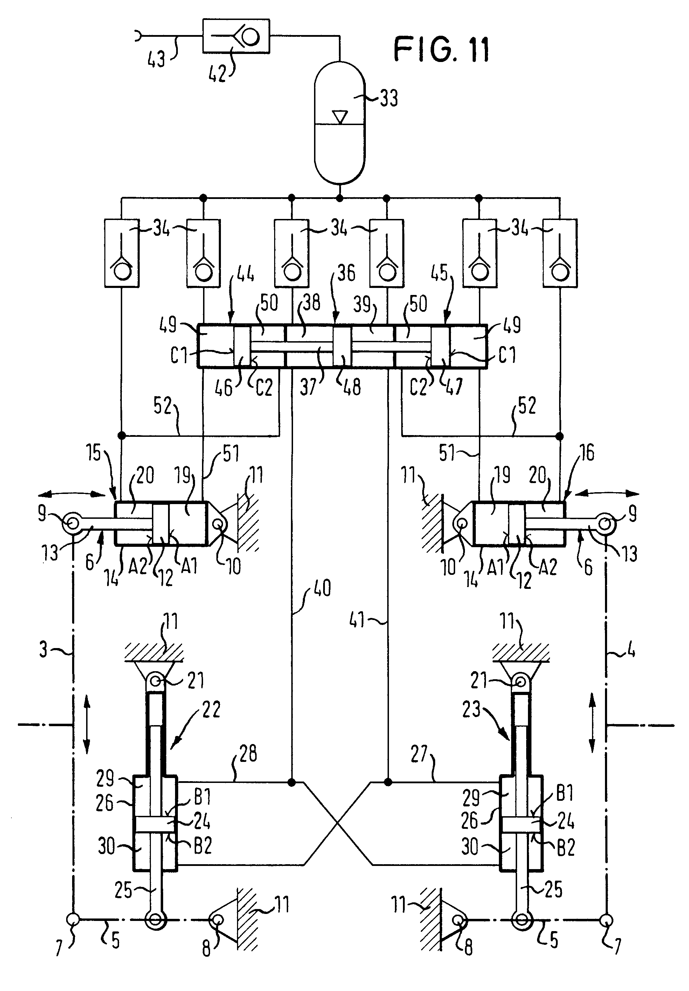

In Fig. 11 ist die in Fig. 9 und 10 vorgesehene erfindungsgemäße, vorzugsweise hydraulische, Anlage schematisch als Schaltplan wiedergegeben. Gleiche Teile sind mit gleichen Bezugszeichen versehen.

Die Erfindung beschränkt sich nicht auf die beschriebenen und in den Zeichnungen dargestellten Beispiele. Weitere Ausführungsbeispiele ergeben sich aus den Merkmalen der Ansprüche und deren Kombination.

### BEZUGSZEICHEN - LISTE

- 1: Rad
- 2: Rad
- 3: Radträger
- 4: Radträger
- 5: unterer Querlenker
- 6: oberer Querlenker
- 7: Anlenkpunkt
- 8: Anlenkpunkt
- 9: Anlenkpunkt
- 10.: Anlenkpunkt
- 11: Fahrzeugrahmen
- 12: Kolben
- 13: Kolbenstange
- 14: Zylinder
- 15: Stellzylinder
- 16: Stellzylinder
- 17: Leitung
- 18: Leitung
- 19: Druckraum v. 15, 16
- 20: Druckraum v. 15, 16
- 21: Anlenkpunkt
- 22: Geberzylinder
- 23: Geberzylinder
- 24: Kolben
- 25: Kolbenstange
- 26: Zylinder
- 27: Leitung
- 28: Leitung
- 29: Druckraum v. 22, 23
- 30: Druckraum v. 22, 23
- 31: Leitung
- 32: Leitung
- 33: Druckspeicher
- 34: Rückschlagventil
- 35: Stellhebel
- 36: Stellzylinder
- 37: Kolbenstange
- 38: Druckraum
- 39: Druckraum
- 40: Leitung
- 41: Leitung
- 42: Rückschlagventil
- 43: Anschlußleitung
- 44: Übertragungszylinder
- 45: Übertragungszylinder
- 46: Kolben
- 47: Kolben
- 48: Kolben
- 49: Druckraum
- 50: Druckraum
- 51: Leitung
- 52: Leitung
- A1: Kolbenfläche
- A2: Kolbenfläche
- B1: Kolbenfläche
- B2: Kolbenfläche
- C1: Kolbenfläche
- C2: Kolbenfläche
- S: Schwerpunkt
- F: Fliehkraft
- M: Momentanzentrum
- W: Sturzwinkel
- R: Rollwinkel

## Patentansprüche

1. Einzelradaufhängung für Fahrzeuge mit einem Fahrzeugrahmen (11) und mittels Radaufhängungsteilen daran angelenkten Rädern (1, 2),
- wobei die im Fahrbetrieb schwingenden Radaufhängungsteile eines jeden Rades (1, 2) einen das Rad (1, 2) um eine Radachse drehbar lagernden Radträger (3, 4) und diesen mit dem Fahrzeugrahmen (11) verbindende Lenker (5, 6) aufweisen,
- wobei zwischen dem Fahrzeugrahmen (11) und einem Radaufhängungsteil (3, 4, 6) Betätigungsmittel (15, 16; 35, 36; 36, 44, 45, 15, 16) vorgesehen sind, die eine als Sturzzylinder bezeichnete erste Kolben-Zylinder-Anordnung (15, 16; 36; 36, 44, 45) aufweisen,
**dadurch gekennzeichnet,**
- **daß** eine als Rollzylinder bezeichnete zweite Kolben-Zylinder-Anordnung (22, 23) zwischen dem Fahrzeugrahmen (11) und einem schwingenden Radaufhängungsteil (3, 4, 5, 6) wirkend vorgesehen ist,
- **daß** der Rollzylinder (22, 23) direkt oder indirekt an einem Anlenkpunkt (7) am schwingenden Radaufhängungsteil (3, 4, 5, 6) und an einem Anlenkpunkt (21) am Fahrzeugrahmen (11) angelenkt ist, zwischen denen bei einer Rollbewegung des Fahrzeugrahmens (11) eine Relativbewegung stattfindet,
- **daß** der Rollzylinder (22, 23; 26) doppeltwirkend ausgebildet ist und zwei von einem Kolben (24) gegeneinander abgedichtete Zylinderräume (29, 30) aufweist,
- **daß** die Zylinderräume (29, 30) des jeweiligen Rollzylinders (22, 23) der Radaufhängungen zweier gegenübergelegener Räder (1, 2) so miteinander verbunden sind, daß die sich bei einer Rollbewegung des Fahrzeugrahmens (11) verkleinernden Zylinderräume und die sich dabei vergrößernden Zylinderräume jeweils miteinander kommunizieren, und
- **daß** die Zylinderräume (29, 30) der Rollzylinder (22, 23) der Radaufhängungen zweier gegenübergelegener Räder (1, 2) mit den Zylinderräumen (19, 20) der ebenfalls doppeltwirkend ausgebildeten Sturzzylinder (15, 16; 36; 36, 44, 45) derselben Radaufhängung derart in Wirkverbindung stehen, daß der Sturz zur Vergrößerung der Seitenführungskräfte verstellt wird, wozu die sich bei einer Rollbewegung des Fahrzeugrahmens (11) verkleinernden Zylinderräume der Rollzylinder (22, 23) mit den sich vergrößernden, einen sturzverstellenden Impuls bewirkenden Zylinderräumen des Sturzzylinders (15, 16; 36; 36, 44, 45) verbunden sind, wobei das Gesamtvolumen der jeweils miteinander verbundenen Zylinderräume konstant ist.

2. Einzelradaufhängung nach Anspruch 1,
**dadurch gekennzeichnet,**
**daß** für beide Radaufhängungen zweier gegenübergelegener Räder (1, 2) ein gemeinsamer Sturzzylinder (36) vorgesehen ist, der mit dem Fahrzeugrahmen (11) und dem jeweiligen Radaufhängungsteil (3, 4, 6) in Wirkverbindung steht und dessen Zylinderräume (38, 39) jeweils mit einem der kommunizierenden Zylinderräume der Rollzylinder (22, 23) verbunden sind.

3. Einzelradaufhängung nach Anspruch 1,
**dadurch gekennzeichnet,**
**daß** für jede Radaufhängung zweier gegenübergelegener Räder (1, 2) ein Sturzzylinder (15, 16) vorgesehen ist, der jeweils mit dem Fahrzeugrahmen (11) und dem jeweiligen Radaufhängungsteil (3, 4, 6) in Wirkverbindung steht,
**daß** die sich bei einerseits positiver und andererseits negativer Sturzverstellung der Radträger (3, 4) verkleinernden Zylinderräume (19, 20) und vergrößernde Zylinderräume (19, 20) der jeweiligen Sturzzylinder (15, 16) kreuzweise miteinander und jeweils mit einem der kommunizierenden Zylinderräume (29, 30) der Rollzylinder (22, 23) verbunden sind.

4. Einzelradaufhängung nach einem der vorhergehenden Ansprüche,
**dadurch gekennzeichnet,**
**daß** die Betätigungsmittel (15, 16; 35, 36; 36, 44, 45, 15, 16) auf den jeweiligen Radträger (3, 4) einwirken.

5. Einzelradaufhängung nach einem der Ansprüche 1 bis 3,
**dadurch gekennzeichnet,**
**daß** die Betätigungsmittel (15, 16; 35, 36; 36, 44, 45, 15, 16) auf den jeweiligen oberen Querlenker (6) einwirken.

6. Einzelradaufhängung nach einem der Ansprüche 1 bis 4,
**dadurch gekennzeichnet,**
**daß** die Betätigungsmittel (15, 16) integraler Bestandteil der oberen Querlenker (6) sind.

7. Einzelradaufhängung nach Anspruch 2,
**dadurch gekennzeichnet,**
**daß** der Sturzzylinder (36) über dritte Kolben-Zylinder-Anordnungen (44, 45) hydraulisch mit den in Wirkverbindung zwischen den Radaufhängungsteilen (3, 4, 6) und dem Fahrzeugrahmen (11) stehenden Betätigungsmitteln (15, 16) verbunden ist.

8. Einzelradaufhängung nach einem der Ansprüche 1 bis 4,
**dadurch gekennzeichnet,**
**daß** die Kolbenstangen des fahrzeugrahmenseitigen Sturzzylinders (36) über Hebelanordnungen (35) und/oder Koppelstangen auf die Radaufhängungsteile (3, 4, 6) zur Sturzverstellung einwirken.

9. Einzelradaufhängung nach einem der Ansprüche 1 bis 8,
**dadurch gekennzeichnet,**
**daß** mehrere hydraulische Komponenten in einem Block zusammengefaßt sind.

10. Einzelradaufhängung nach Anspruch 1,
**dadurch gekennzeichnet,**
**daß** die beiden die Relativbewegung aufnehmenden Rollzylinder (22, 23) auf beiden Seiten des Kolbens (24) jeweils gleiche Kolbenflächen aufweisen.

11. Einzelradaufhängung nach Anspruch 1 oder 3,
**dadurch gekennzeichnet,**
**daß** die die Sturzverstellung bewirkenden, beidseitig zwischen Radaufhängungsteilen (3, 4, 6) und dem Fahrzeugrahmen (11) angeordneten Sturzzylinder (15, 16) auf beiden Seiten ihres Kolbens (12) jeweils ungleiche Kolbenflächen aufweisen.

12. Einzelradaufhängung nach Anspruch 1,
**dadurch gekennzeichnet,**
**daß** das gesamte hydraulische System auf erhöhten Basisdruck gebracht ist.

13. Einzelradaufhängung für Fahrzeuge nach Anspruch 1,
**dadurch gekennzeichnet,**
**daß** zusätzliche Betätigungsmittel mit den Rollzylindern (22, 23) in Wirkverbindung stehen und vorzugsweise auf die Spurstangen einwirken.

## Claims

1. An independent wheel suspension for vehicles comprising a vehicle chassis (11) and wheels (1, 2) that are linked thereto by means of wheel suspension parts,
- wherein the wheel suspension parts of each of the wheels (1, 2), which parts oscillate during travelling operation, comprise a hub carrier (3, 4) upon which the wheel (1, 2) is mounted such as to be rotatable about a wheel axis and links (5, 6) which connect said hub carrier to the vehicle chassis (11),
- wherein, between the vehicle chassis (11) and a wheel suspension part (3, 4, 6), there are provided actuating means (15, 16; 35, 36; 36, 44, 45, 15, 16) which comprise a first piston-cylinder arrangement (15, 16; 36; 36, 44, 45) that is referred to as a camber cylinder,
**characterised**
- **in that** there is provided a second piston-cylinder arrangement (22, 23) which is referred to as a roll cylinder and is acting between the vehicle chassis (11) and an oscillating wheel suspension part (3, 4, 5, 6),
- **in that** the roll cylinder (22, 23) is linked directly or indirectly to an articulation point (7) on the oscillating wheel suspension part (3, 4, 5, 6) and to an articulation point (21) on the vehicle chassis (11) between which a relative movement takes place in the event of a roll movement of the vehicle chassis (11),
- **in that** the roll cylinder (22, 23; 26) is a double-acting arrangement comprising two cylinder chambers (29, 30) which are sealed relative to one another by means of a piston (24),
- **in that** the cylinder chambers (29, 30) of the respective roll cylinder (22, 23) of the wheel suspensions of two oppositely located wheels (1, 2) are coupled together such that the respective cylinder chambers which are decreasing in size during a roll movement of the vehicle chassis (11) and the respective cylinder chambers which are simultaneously increasing in size communicate with one another, and
- **in that** the cylinder chambers (29, 30) of the roll cylinders (22, 23) of the wheel suspensions of two oppositely located wheels (1, 2) are effectively coupled to the cylinder chambers (19, 20) of the likewise double-acting camber cylinder (15, 16; 36; 36, 44, 45) of the same wheel suspension in such a manner that the camber is adjusted such as to increase the cornering force, whereby the cylinder chambers of the roll cylinders (22, 23) which are decreasing in size during a roll movement of the vehicle chassis (11) are connected to the cylinder chambers of the camber cylinder (15, 16; 36; 36, 44, 45) which are increasing in size and are producing a camber adjustment pulse so that the total volume of the mutually inter-connected cylinder chambers is constant on each occasion.

2. An independent wheel suspension in accordance with Claim 1,
**characterised**
**in that** a common camber cylinder (36) is provided for the two wheel suspensions of two oppositely located wheels (1, 2), said common camber cylinder being effectively coupled to the vehicle chassis (11) and to the respective wheel suspension part (3, 4, 6) and the cylinder chambers (38, 39) thereof being connected to a respective one of the communicating cylinder chambers of the roll cylinders (22, 23).

3. An independent wheel suspension in accordance with Claim 1,
**characterised**
**in that** a camber cylinder (15, 16) is provided for each wheel suspension of two oppositely located wheels (1, 2), said camber cylinder being effectively coupled to the vehicle chassis (11) and to the respective wheel suspension part (3, 4, 6),
**in that** the cylinder chambers (19, 20) of the respective camber cylinders (15, 16) which are decreasing in size and the cylinder chambers (19, 20) thereof which are increasing in size during a positive camber adjustment of the hub carriers (3, 4) on the one hand and a negative camber adjustment thereof on the other are cross-connected to one another and are connected to a respective one of the communicating cylinder chambers (29, 30) of the roll cylinders (22, 23).

4. An independent wheel suspension in accordance with any of the preceding Claims,
**characterised**
**in that** the actuating means (15, 16; 35, 36; 36, 44, 45, 15, 16) are effective on the respective hub carrier (3, 4).

5. An independent wheel suspension in accordance with any of the Claims 1 to 3,
**characterised**
**in that** the actuating means (15, 16; 35, 36; 36, 44, 45, 15, 16) are effective on the respective upper transverse link (6).

6. An independent wheel suspension in accordance with any of the Claims 1 to 4,
**characterised**
**in that** the actuating means (15, 16) form an integral part of the upper transverse link (6).

7. An independent wheel suspension in accordance with Claim 2,
**characterised**
**in that** the camber cylinder (36) is hydraulically connected via third piston-cylinder arrangements (44, 45) to the actuating means (15, 16) which are effectively coupled between the wheel suspension parts (3, 4, 6) and the vehicle chassis (11).

8. An independent wheel suspension in accordance with any of the Claims 1 to 4,
**characterised**
**in that** the piston rods of the camber cylinder (36) at the vehicle chassis end are effective on the wheel suspension parts (3, 4, 6) for the purposes of adjusting the camber by means of lever arrangements (35) and/or coupling rods.

9. An independent wheel suspension in accordance with any of the Claims 1 to 8,
**characterised**
**in that** a plurality of hydraulic components are combined in a block.

10. An independent wheel suspension in accordance with Claim 1,
**characterised**
**in that** the two roll cylinders (22, 23) registering the relative movement each have the same piston area on each side of the piston (24).

11. An independent wheel suspension in accordance with Claim 1 or 3,
**characterised**
**in that** the camber cylinders (15, 16), which effect the adjustment of the camber and which are arranged at each side between the wheel suspension parts (3, 4, 6) and the vehicle chassis (11), have unequal piston areas on each side of the piston (12) thereof.

12. An independent wheel suspension in accordance with Claim 1,
**characterised**
**in that** the entire hydraulic system is subjected to an enhanced basic pressure.

13. An independent wheel suspension for vehicles in accordance with Claim 1,
**characterised**
**in that** additional actuating means are effectively coupled to the roll cylinders (22, 23) and are preferably effective on the track rods.

## Revendications

1. Suspension de roue individuelle pour véhicules avec un châssis de véhicule (11) et des roues (1, 2) articulées sur celui-ci au moyen de pièces de suspension de roues, dans laquelle :
- les pièces de suspension de roues, oscillant pendant le roulement, de chaque roue (1, 2) comprennent un support de roue (3, 4) monté rotatif autour d'un essieu de roue et des bras de suspension reliant celui-ci au châssis de véhicule (11),
- des moyens d'actionnement (15, 16 ; 35, 36 ; 44, 45, 15, 16) sont prévus entre le châssis de véhicule (11) et une pièce de suspension de roue (3, 4, 6), lesdits moyens présentant un premier agencement à piston-et-cylindre (15, 16 ; 36 ; 36, 44, 45) appelé cylindre de carrossage,
**caractérisée en ce que**
- un deuxième agencement à piston-et-cylindre (22, 23) appelé cylindre de roulis est prévu pour agir entre le châssis de véhicule (11) et une pièce de suspension de roue (3, 4, 5, 6) oscillante,
- le cylindre de roulis (22, 23) est articulé directement ou indirectement sur un point d'articulation (7) sur la pièce de suspension de roue (3, 4, 5, 6) oscillante et sur un point d'articulation (21) sur le châssis de véhicule (11), entre lesquels un mouvement relatif se produit lors d'un mouvement de roulis du châssis de véhicule (11),
- le cylindre de roulis (22, 23 ; 26) est réalisé à double effet et présente deux chambres cylindriques (29, 30) étanchées l'une vis-à-vis de l'autre par un piston (24),
- les chambres cylindriques (29, 30) du cylindre de roulis respectif (22, 23) des suspensions de deux roues (1, 2) situées l'une en face de l'autre sont reliées l'une à l'autre de telle sorte que les chambres cylindriques qui se réduisent lors d'un mouvement de roulis du châssis de véhicule (11) communiquent avec les chambres cylindriques qui alors s'agrandissent, et
- les chambres cylindriques (29, 30) des cylindres de roulis (22, 23) des suspensions de deux roues (1, 2) situées l'une en face de l'autre sont en liaison active avec les chambres cylindriques (19, 20) des cylindres de carrossage (15, 16 ; 36 ; 36, 44, 45) également réalisés à double effet, de la même suspension de roue, de telle sorte que le carrossage est réglé pour augmenter les forces de guidage latéral, ce pourquoi les chambres cylindriques des cylindres de roulis (22, 23), qui se réduisent lors d'un mouvement de roulis du châssis de véhicule (11), sont reliées aux chambres cylindriques du cylindre de carrossage (15, 16 ; 36 ; 36, 44, 45) qui s'agrandissent et provoquent une impulsion de réglage de carrossage, le volume total des chambres cylindriques reliées respectivement les unes aux autres étant constant.

2. Suspension de roue individuelle selon la revendication 1, **caractérisée en ce que** pour les deux suspensions de deux roues (1, 2) qui sont situées l'une en face de l'autre, il est prévu un cylindre de carrossage (36) commun qui est en liaison active avec le châssis de véhicule (11) et avec la pièce de suspension de roue respective (3, 4, 6), et dont les chambres cylindriques (38, 39) sont chacune reliées avec une des chambres cylindriques communicantes des cylindres de roulis (22, 23).

3. Suspension de roue individuelle selon la revendication 1, **caractérisée en ce que** :
pour les deux suspensions de deux roues (1, 2) qui sont situées l'une en face de l'autre, il est prévu un cylindre de carrossage (15, 16) qui est en liaison active respective avec le châssis de véhicule (11) et avec la pièce de suspension de roue (3, 4, 6) respective,
les chambres cylindriques (19, 20) qui se réduisent et les chambres cylindriques (19, 20) qui s'agrandissent, des cylindres de carrossage respectifs (15, 16) lors d'un réglage de carrossage positif, d'une part, et d'un réglage de carrossage négatif, d'autre part, sont reliées l'une à l'autre en croix et chacune avec une des chambres cylindriques (29, 30) communicantes des cylindres de roulis (22, 23).

4. Suspension de roue individuelle selon l'une quelconque des revendications précédentes, **caractérisée en ce que** les moyens d'actionnement (15, 16 ; 35, 36 ; 36, 44, 45, 15, 16) agissent sur le support de roue (3, 4) respectif.

5. Suspension de roue individuelle selon l'une quelconque des revendications 1 à 3, **caractérisée en ce que** les moyens d'actionnement (15, 16 ; 35, 36 ; 36, 44, 45, 15, 16) agissent sur le bras de suspension supérieur (6) respectif.

6. Suspension de roue individuelle selon l'une quelconque des revendications 1 à 4, **caractérisée en ce que** les moyens d'actionnement (15, 16) font partie intégrante des bras de suspension supérieurs (6).

7. Suspension de roue individuelle selon la revendication 2, **caractérisée en ce que** le cylindre de carrossage (36) est relié par voie hydraulique et via des troisièmes agencements à piston-et-cylindre (44, 45) avec les moyens d'actionnement (15, 16) qui sont en liaison active entre les pièces de suspension de roue (3, 4, 6) et le châssis de véhicule (11).

8. Suspension de roue individuelle selon l'une quelconque des revendications 1 à 4, **caractérisée en ce que** les tiges de piston du cylindre de carrossage (36) du côté du châssis de véhicule agissent via des agencements à leviers (35) et/ou via des tiges de couplage sur les pièces de suspension de roues (3, 4, 6) pour régler le carrossage.

9. Suspension de roue individuelle selon l'une quelconque des revendications 1 à 8, **caractérisée en ce que** plusieurs composants hydrauliques sont réunis dans un bloc.

10. Suspension de roue individuelle selon la revendication 1, **caractérisée en ce que** les deux cylindres de roulis (22, 23) encaissant le mouvement relatif présentent des deux côtés du piston (24) des surfaces de piston respectives égales.

11. Suspension de roue individuelle selon l'une ou l'autre des revendications 1 et 3, **caractérisée en ce que** les cylindres de carrossage (15, 16) provoquant le réglage de carrossage, agencés des deux côtés entre des pièces de suspension de roues (3, 4, 6) et le châssis de véhicule (11), présentent des deux côtés de leur piston (12) des surfaces de piston respectives inégales.

12. Suspension de roue individuelle selon la revendication 1, **caractérisée en ce que** la totalité du système hydraulique est amenée à une pression de base surélevée.

13. Suspension de roue individuelle selon la revendication 1, **caractérisée en ce que** des moyens d'actionnement additionnels sont en liaison active avec les cylindres de roulis (22, 23) et agissent de préférence sur les barres d'accouplement.
